# EUROPEAN PATENT APPLICATION

(11) **EP 4 155 770 A1**
(43) Date of publication of application: **29.03.2023**
(21) Application number: 21198830.8
(22) Date of filing: 24.09.2021
(51) Int. Cl.: G01S 13/86, G01S 13/933, G01S 13/10, G01S 13/95, G01S 13/02, G01S 13/42, G01S 13/22, G01S 13/24, G01S 7/41

(54) **APPARATUS AND METHOD FOR IMPROVING AND SCHEDULING OF RADAR SYSTEMS**

(71) Applicant: HENSOLDT Sensors GmbH, 82024 Taufkirchen (DE); Universität der Bundeswehr München, 85579 Neubiberg (DE)
(72) Inventor: KUNSTMANN, Florian, 89233 Neu-Ulm (DE); HENNIG, Jens, 89075 Ulm (DE); STÜTZ, Peter, 85276 Pfaffenhofen (DE); DUDEK, Adrian, 81739 München (DE)
(74) Representative: LifeTech IP Spies & Behrndt Patentanwälte PartG mbB

(57) **Abstract**

An apparatus (100) for improving an airborne radar system (30) based on sensor data of an airborne electro-optical sensor (50) is disclosed. The electro-optical sensor (50) is configured to provide optical sensor data for at least a partial surround view. The apparatus (100) comprises a processing module (110) configured to identify in the optical sensor data one or more regions of interest, ROI (70), and to determine at least one characteristic of the ROI (70); and a control module (120) configured to control at least one parameter of the radar system (30) based on the at least one characteristic.

## Description

The present invention relates to an apparatus and method for improving an airborne radar system, to a method for scheduling of an airborne radar system and, in particular, to an improvement of airborne weather radar performance with additional sensors. The scheduling may involve an adjustment of radar operation parameters and the resource management to improve the output and to provide the pilot with more information on hazardous weather phenomena.

### BACKGROUND

Detect and Avoid systems are installed on board of many manned and unmanned aircrafts. In particular, unmanned aircrafts have to comply with safety requirements to safely integrate the unmanned aircrafts into the airspace by complying with special regulations for the on-board systems. For example, collisions with other air traffic participants are prevented by ensuring their own visibility "free of clouds". This can be implemented by operating the aircraft according to visual flight rules (VFR), for which - depending on the airspace flown through - legal minimum distances to clouds are to be maintained. In addition, weather phenomena such as turbulence and icing, e.g. in thunderstorm cells, pose an increased risk to the aircraft structure and should be avoided. These challenges make a reliable on-board Detect and Avoid system essential.

However, conventional weather radar systems have limitations, because the detection of weather and wind areas is only possible if there is precipitation detectable inside those regions. The radar reflectivity depends on the droplet size, density and aggregate state. Furthermore, ground clutter echoes degrade the detection result. Therefore, the results are often insufficient.

Conventional improvements of weather radars have their own limitations or need a considerable amount of on-board of resources. To improve the situation, CN108761576A discloses a fusion of weather radar and ground-based precipitation data, US 9,869,766 B1 describes an augmentation of airborne weather radar with external weather data. A detection of weather radar clutter by information fusion with satellite imagery is disclosed in https://ieeexplore.ieee.org/document/4241283. However, these conventional systems rely on additional data that is not available on the aircraft.

Therefore, there is a need to overcome the mentioned limitations and to improve the detection performance of weather phenomena. In addition, there is a demand for reliable detect and avoid algorithms for avoiding dangerous weather situations.

### SUMMARY OF THE INVENTION

At least some of the above-mentioned problems are solved by an apparatus for improving and scheduling of radar systems according to claim 1, and corresponding methods according to claim 12 and claim 13. The dependent claims refer to further advantageous realizations for the subject matters of the independent claims.

The present invention relates to an apparatus for improving an airborne radar system based on sensor data of an airborne electro-optical sensor. The electro-optical sensor is configured to provide optical sensor data for at least a partial surround view. The apparatus comprises a processing module and a control module. The processing module is configured to identify in the optical sensor data one or more regions of interest, ROI, and to determine at least one characteristic of the ROI. The control module is configured to control at least one parameter of the radar system based on the at least one characteristic. The optical sensor data may include spectral data of the visible and/or infrared spectrum.

The radar system may not be a dedicated weather radar, but may be primarily designed for other purposes (e.g. for an intruder detection). Nevertheless, many radar systems are operable as weather radars, even though they will be utilized most of the time for other purposes. The electro-optical sensor may be any device capable of obtaining optical images and may comprise one or more cameras.

It is understood that on-board the aircraft the sensor data is transmitted via a board network, to which the apparatus can be connected so that the processing module can receive the optical sensor data and the control module can communicate with the radar system. In addition, the processing module may comprise image processing functions e.g. to identify structures or objects such as clouds in the optical sensor data. It is further understood that the modules do not (necessarily) relate to dedicated units, but may be implemented by software in a single processing unit (e.g. in a computer).

Likewise, the apparatus may improve a radar scheduling. For example, the radar can be operated in a default operation and is switched only into the weather radar mode upon an identification of a region of interest based on optical sensor data covered by the electro-optical sensor.

The radar system may comprise an active electronically scanned array, AESA, and the control module is optionally configured to adjust as parameter one or more of the following: a wave form, a beam width, a beam forming, a length of pulses, a number of pulses, a (transmission) frequency of pulses, pulse repetition frequency (PRF), a transmission power, an electronical steering of the radar transmission, a sampling rate. The parameter(s) may be given dependent on an antenna aperture, but may be influenced by tapering the pulse/waveform. For example, sidelobe suppression may lead to larger beam width, which may provide advantages for the intensity, but drawbacks for the resolution.

The waveform may relate to pulsed or continuous (e.g. sinus-shaped) radar signals. For example, the radar signal may comprise a plurality of rectangular pulses with a pulse width. The length and/or the number of the pulses may be modified. In particular, for objects which are very close, the length of the pulses should be as short as possible in order to have enough time for the return signals to be processed (the radar blind zone is dependent on the pulse width). Furthermore, the frequency may be switched between different frequency bands to be used for different weather phenomena or for other purposes such as an intruder detection. The same applies to the transmission power. To be able to "look" inside a potential thunderstorm cell, the power can be adjusted accordingly.

The ROI can be or comprise anything which influences the flight behavior. In particular, the ROI comprises at least part of a cloud, wherein the processing module is configured to determine as characteristic of the cloud or its part one or more of the following: a shape, an extension in azimuth or elevation, a maximal extension, a distance (or range) to the cloud or its part, a color or grey scale. For example, the radar sensitivity can be increased in the ROI, and it may be increased only there. This is of particular advantage, because a high sensitivity mode requires significant resources for the radar system which might be needed for other purposes such as the object or intruder detection. Therefore, the radar system should only be operated in the weather radar mode, when it is really needed (e.g. there is no need in case of cloudless sky).

According to further embodiments, a (primitive) weather mode may run all time, because of the limitation of the camera. For example, only for short periods in time (e.g. about 10 percent of the radar scan time), the radar system may scan, in the weather mode, one or more localized regions frequently during short interruptions of another operation mode of the radar system (e.g. the object or intruder detection). If there are ROIs detected by either camera or radar itself, then the weather radar mode will be initiated with better performance at those ROIs.

For this, the electro-optical sensor may provide panoramic view to cover a broad region around the aircraft (e.g. surround view), not only the front portion (i.e. the region which is in front of the aircraft when viewed in the direction of movement of the aircraft). In addition, the electro-optical sensor may be configured to enable a distance measurement (i.e. a 3D imaging). The distance measurement may rely on travel-time measurements (for reflection signals; e.g. using a light source such as a laser), on stereographic imaging or triangulations or parallactic distance measurements or others methods. It is noted, the position, orientation, altitude and/or speed of the aircraft will be known in most scenarios so that the distance can be calculated already from a change of an angle in time, under which the cloud is visible. It is understood, that corresponding on-board sensors are available to determine the above parameters. For example, the position may be measured by GNSS-receiver(s), the speed may be measured by Pitot tube(s), the orientation may be measured by Inertial Measurement Unit(s).

Optionally, the processing module is configured to determine as part of the characteristic at least one of the following: a classification of the clouds, an associated weather phenomenon, an associated hazard category. The classification of clouds comprises, for example, clouds such as cumulonimbus (Cb) clouds that cause often strong winds, or other critical conditions which have to be taken into account by the aircraft. Associated weather phenomena are, for example, thunderstorm cells or heavy rain, snow or hail regions. The hazard categories may be grouped in a scale depending on their criticality for flight safety. All this can be determined based on the visual images provided by the electro-optical sensor. The electro-optical cloud detection may determine a vertical and/or horizontal cloud extension and can be used for cloud type classification, from which a hazard assessment can be derived.

Optionally, if the hazard category exceeds a predetermined level, the processing module is further configured to cause a determination of an evasive maneuver and/or to provide data for visualization of the respective ROIs. For this, the processing module may be configured to provide navigational or positional data that enable the determination of an evasive maneuver.

Optionally, the processing module is further configured to receive raw or processed radar data from the radar system and/or, based on the determined characteristic, to identify clutter signals in the radar data, and/or to remove identified clutter signals.

For example, a camera can easily identify typical objects in the scenery that may cause clutter signals (e.g. power lines, high buildings, landmarks, mountains etc.). Thus, according to some embodiments, this information is used to identify and mark actual clutter. Additionally or alternatively, the processing module may also be configured to change a threshold of a filter for ground clutter, which may be present on the aircraft.

Optionally, the radar system is operable in two modes: in a weather radar mode, and in an object detection mode. The control module maybe configured to control radar system in the weather radar mode during idle times of the object detection mode. As a default operation, the radar system may be operable in the object detection mode where it is in particular able to identify any intruder, but also to identify any artificial or natural obstacles which should be avoided by the aircraft. So, if the radar system is not a dedicated weather radar (but includes a weather mode), it is switched into the weather radar mode only on demand. It is also possible that the object detection mode is performed in an intermittent operation so that it is usable (repeatably) as weather radar whenever it is not operated in the object detection mode.

The term "object" shall be understood broadly and shall include in particular objects like: an intruder, a mountain, a lake, a building, a landmark, a tower, a wind turbine etc. Dependent on the object, the radar system may operate differently. For example, it may operate in a pulsed mode (with appropriate pulse lengths/widths) or in a contiguous wave mode. Hence, the object detection mode shall cover all operation modes other than a weather detection mode. Therefore, the radar system may be switchable between three or more operation modes.

Optionally, the processing module is further configured to provide guidance to maintain a minimum distance to any cloud and thus to support an operation under visual flight rules. This is of particular advantage for unmanned aircrafts that have to be visible in the airspace.

The radar system may be blind at a near region. Then, optionally, the processing module is further configured to provide the optical sensor data as replacement of the radar system for the near region. The aircraft may be forced to fly under visual flight rules so that a minimum distance of any clouds has to be kept at all times. Therefore, the optical sensor data can be used to identify any clouds in the surrounding of the aircraft and can be used to provide navigational data or provide otherwise data identifying the clouds and the distances to the clouds to enable the aircraft to plan a trajectory that circumvents all clouds.

The blindness involves especially a pulsed radar operation. These radars need a minimum pulse width, for correct operation the return signal should be received only after the pulse has been transmitted. Therefore, the radar system has blind region defined by the minimum pulse width. This blind region covers, for example, regions which are closer than 500 meters within the detection range. In this region the optical sensor can thus be used to replace the radar system in order to identify any potential conditions such as cloud objects and other critical conditions which may occur at a close distance to the aircraft.

Optionally, the control module is further configured to control the radar system to scan in azimuthal direction and/or to scan in elevation direction for the ROI only.

Embodiments relate further to an aircraft with: a radar system, especially a radar system with an active electronically scanned array; an electro-optical sensor, especially with a panoramic view; and an apparatus as described before. The aircraft may be an unmanned (e.g. a drone) or a manned aircraft.

Embodiments relate further to a method for improving an airborne radar system based on sensor data of an airborne electro-optical sensor. The electro-optical sensor is configured to provide optical sensor data covering at least part of a surrounding region. The method comprises:
- identifying in the optical sensor data one or more regions of interest, ROI;
- determining at least one characteristic of the ROI; and
- controlling at least one parameter of the radar system based on the at least one characteristic.

Embodiments relate further to a method for scheduling a radar system, the radar system being configured to operate in a weather radar mode and in an object detection mode. The method comprises:
- operating the radar system in the object detection mode as default operational mode;
- receiving from a processing module at least one region of interest, ROI, indicating a potential critical weather condition;
- when no objects are to be identified, switching the radar system into the weather radar mode and scanning the ROI to verify the critical weather condition; and thereafter
- switching the radar system again in the object detection mode.

In particular, the switching of the radar system is carried out when no objects are to be identified. Optionally, the switching of the radar system comprises changing at least one of the following radar parameters: a frequency, a modulation, a pulse width, a start or terminating of a continuous wave operation, a power, a beam width, a PRF, a number of pulses, a scan angle.

These methods may be computer-implemented methods. A person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor or data processing unit.

Embodiments solve at least part of the above-mentioned problems as follows:
The radar system may be or comprise an AESA (Active Electronically Scanned Array) antenna. Then, according to some embodiments, at least one additional sensor can be installed in the weather radar system, which includes an electro-optical sensor (e.g. one or more monochrome or chromatic cameras). The weather radar or the electro-optical sensor may provide an initial indication of a weather phenomenon. However, if this initial detection quality is not sufficient or detailed enough for a hazard assessment, an additional, automatic feedback for the weather radar may be implemented.

With the help of this feedback information, it is possible to adjust the pulse parameters (waveform, pulse repetition frequency) and/or the power of the radar system to better illuminate the desired weather phenomenon. With the adjusted pulse parameters, the illuminated weather region may be better separated from the ground clutter returns and a better Doppler analysis can be performed. Embodiments enable thus a hazard assessment for a weather area without precipitation, because of the visual feedback in combination with suitable algorithms. For cloud detection, accurate range information or information about precipitation simplifies the classification of a cloud object.

Embodiments provide at least the following advantages:
- In Detect and Avoid systems, a detection of dangerous weather phenomena can be combined with a collision detection and avoidance.
- The detection of individual cloud objects can be utilized to comply with minimum legal cloud distances.
- The detection performance of the weather radar can be improved, despite the radar limitations.
- The radar information improves the cloud detection by providing accurate distance information and information on precipitation.
- The additional (electro-optical) sensors work complementary. For example, a camera has its advantages where the radar sensor has its disadvantages and vice versa. Therefore, a combination provides significant advantages.
- In multifunctional radar systems, the weather radar function is only a sub-function and does not has an excessive time budget. Therefore, it is possible to use a time-limited and low-power weather mode in combination with the electro optical detection to scan for only indicators of potential hazards and then use a high-powered time-consuming pulse mode, only in the regions of special interest.
- With both sensors standing alone, a reliable Detect and Avoid is difficult to implement due to insufficient information quality. The fusion of both sensor data would make this possible.

### BRIEF DESCRIPTION OF THE DRAWINGS

Various embodiments of the present invention will be described in the following by way of examples only, and with respect to the accompanying drawings, in which:
- Fig. 1: depicts a schematic view of an apparatus according to embodiments for improving an airborne radar system.
- Fig. 2: depicts an exemplary scenario of an aircraft utilizing the apparatus of Fig. 1.
- Figs. 3A, 3B: show schematically flow charts of methods according to embodiments.

### DETAILED DESCRIPTION

Various examples will now be described more fully with reference to the accompanying drawings in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

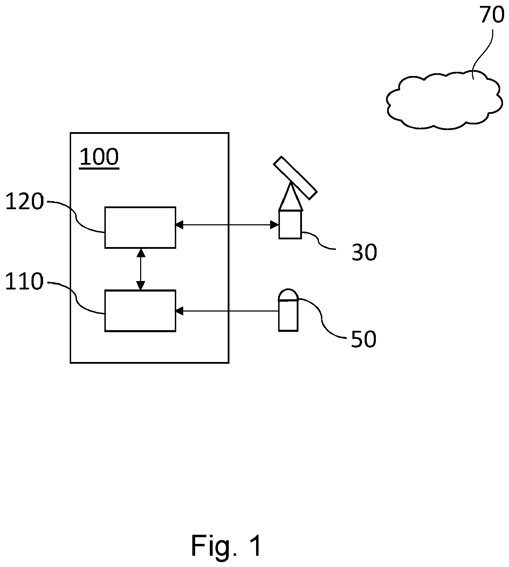

**Fig. 1** depicts a schematic view of apparatus 100 according to embodiments for improving an airborne radar system 30 by using sensor data of an airborne electro-optical sensor 50. The radar system 30 as well as the electro-optical sensor 50 are installed on an aircraft which can be an unmanned aircraft (e.g. a drone) or a manned aircraft (not shown). The electro-optical sensor 50 is, for example, configured to provide a surround or panoramic view around the aircraft and provides respective optical sensor data that cover at least a region around the aircraft.

The apparatus 100 may likewise be installed on the aircraft and includes a processing module 110 and a control module 120. The processing module 110 is configured to receive the optical sensor data from the electro-optical sensor 50 and to identify one or more regions of interest, ROIs, in the optical sensor data (e.g. in the images) and to determine at least one characteristic of the ROI(s). The regions of interest are or comprise, for example, clouds or cloud formations and other visible phenomena such as heavy storms or lightning or heavy rain fall which may indicate critical weather conditions that should be taken into account.

The control module 120 is configured to control at least one parameter of the radar system 30 based on the at least one characteristic that is determined by the processing module 110. For example, the radar system 30 can be switched to a different operational mode (for example from an intruder detection mode to a weather radar mode) to identify or to verify the critical weather conditions appeared in the optical sensor data.

According to embodiments, the processing module 110 may take into account the flight direction of the aircraft or a planned trajectory of an unmanned aircraft in order to identify the regions of interest 70 and may continuously monitor the surrounding of the aircraft.

Moreover, the radar sensor 30 may send the processed radar data to the control module 120 for verification whether the identified radar return signals relate to clutter or to actual objects detected by the radar system 30. It is understood that a processing of radar data is normally performed within the radar system 30, but may also take place in the processing module 110. The data from the sensors may be evaluated in the processing module 110, the control module 120 may only be used for adjusting the pulse (or any other parameter of the radar system 30) according to the information from the processed data.

The control module 120 or the processing module 110 may verify these radar return signals based on the optical sensor data which may indicate a ground or mountains or other landmarks that can be the source of the radar return signals.

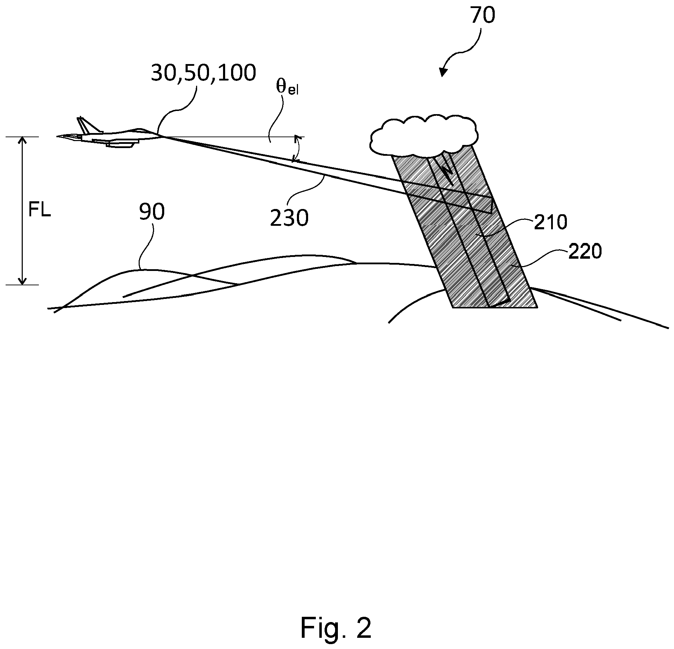

**Fig. 2** depicts an exemplary scenario including an aircraft with the apparatus 100 flying in an altitude FL over ground 90 and facing a potential region of interest 70, which is an exemplary thunderstorm cell located at a certain distance from the aircraft. The cloud formation 70 causes rainfall 220 with a particular region of heavy rainfall 210 located inside the region of rainfall 220. The electro-optical sensor 50 may produce optical sensor data indicating the cloud 70 and, possibly, the region of rainfall 220, but may not see the heavy rainfall region 210 that is hidden inside the region 220.

Therefore, the processing unit 110 will identify the region 70 where the rainfall 220 occurs and will provide corresponding information (e.g. the location in azimuth and elevation) to the radar system 30 to verify or to further specify the region of rainfall 220 whether it is moderate or whether it is heavy or includes regions 210 of heavy rainfall. If so, an avoidance path may be suggested or its determination may be triggered. To achieve this, the control unit 120 modifies radar parameters to enable the radar signal not only to detect the region of rainfall 220, but to pass through the region of rainfall 220 to identify the potential heavy rainfall regions 210.

The electro-optical sensor 50 may provide a surround view around the aircraft, not only in a 360° azimuth surrounding, but also with respect to the elevation angles θ so that the processing module 110 is able to identify a shape of the region of interest 70 and can give directions to the radar system 30, which region in azimuth and/or elevation shall be scanned. Then, the radar system 30 may scan this region 70 only, i.e. to limit the scan in azimuth and/or in elevation. Advantageously, the radar system 30 may scan in a default operation only the azimuth angle with a fixed elevation angle θₑₗ (see region 230 in Fig. 2). Only upon specific instructions from the processing module 110, the radar sensor 30 may scan also the elevation direction. Another advantage of this is the following. The beam width of a small antenna is normally very large. The weather processing works at its best, if the beam is "completely filled" with the weather phenomena. With the knowledge of the position/extension of the ROI it is now possible to place the beam exactly in the middle such that it will provide more precise intensity results.

Embodiments can be implemented in any flying platform that is equipped with a Detect & Avoid system and may include not only an AESA radar 30, but also an electro-optical sensor 50 and associated on-board data processing software for detection of weather phenomena (e.g. installed on the processing unit 110 and/or control unit 120).

The electro-optical cloud detection by the electro-optical sensor 50 or by the weather radar 30 may provide only an initial indication that a potentially relevant weather phenomena maybe present in the (planned) direction of flight. The processing unit 110 includes a cloud detection component, which may be implemented by a software/hardware -based image processing function that analyses optical sensor data to identify objects such as clouds therein or produces depth maps related to the present cloud scenery. Based on the detection or presence of clouds, the processing unit 110 may provide information on whether clouds are present in the radar field of view and determine their extent in elevation and azimuth. With this information, radar pulse parameters (waveform, pulse repetition frequency, transmit power) can be changed so that the sensitivity of the radar 30 can be increased. This is done by the control module 120.

In addition, the information about the presence of clouds enables improved discrimination between ground clutter and actual weather phenomena in the radar image (radar sensor data). By associating the detection results of the two types of sensors 30, 50, information about the cloud dimension, distance, and precipitation is available that allows a more accurate hazard assessment of weather areas, whereupon cloud evasion trajectories can be calculated and evasive manoeuvres can be flown.

Embodiments relate also to an aircraft that is equipped with a multi-sensor system that includes an AESA radar 30, one or more electro-optical sensors 50, and the apparatus 100. The plurality of electro-optical sensors 50 provide a visual image of the weather pattern, e.g. in the direction of flight. The processing module 110 analyzes this imagery by real-time image-processing algorithms on on-board computers by detecting clouds and determining the distance to them. According to embodiments, the AESA radar 30 provides a mode for detecting weather phenomena, but is actually a multifunctional radar and thus can also include other modes, such as intruder detection. Therefore, a multifunctional multi-sensor system on the aircraft enables a Detect & Avoid of weather phenomena. In the following the radar system 30 is also denoted as weather radar, even though it may not be a dedicated weather radar system but includes only a corresponding weather radar mode.

Embodiments are of particular advantage for unmanned or partially manned aircraft that should be able to comply with visual flight rules. Thus they shall maintain minimum cloud distances, and shall identify dangerous weather areas as such and to fly around them (in an evasive maneuver).

Embodiments overcome limitations of the two types of sensors which are subject to sensor-specific constraints. These limitations are complementary. On the one hand, weather radar systems are able to detect weather areas depending on droplet size, density and aggregate state of the droplets. Cloud objects whose droplets are too small or not dense enough cannot be detected by the radar 30. If the reflectivity of the cloud particles is sufficient, the distance to them can be determined very precisely. On the other hand, image-based cloud detection can determine individual cloud objects and their dimensions. However, this type of cloud detection is highly dependent on environmental influences, such as wind, terrain, or lighting conditions. In addition, certain inaccuracies occur in the distance determination of image-based approaches to cloud detection. When the detection results of both systems are combined, as in embodiments, one type of sensor could compensate for the weaknesses of the other, which provides a major benefit of the combination.

Advantages of this combination of sensors can be summarized as follows. If a cloud contains precipitation and thus can be detected by the weather radar 30, a precise distance information is available. The information provided by the weather radar 30 as to whether a cloud contains precipitation, together with the dimension of the cloud determined by the electro-optical sensor 50, can simplify a classification of the cloud type and thus be useful for an improved hazard assessment. This, in turn, influences the calculation of the cloud avoidance trajectory.

Furthermore, upon indication of the electro-optical cloud detection, radar pulse parameters can be changed in such a way that certain (cloud) areas are investigated in more detail by the radar system 30 in order to increase the sensitivity of the radar in regions with predicted cloud occurrence. In addition, by indicating cloud presence through image-based cloud detection, clutter suppression can be improved by adjusting thresholds to filter ground clutter.

Moreover, according to embodiments, in the immediate vicinity in the direction of flight, cloud detection by image-based cloud detection is possible, while the radar system 30 may be blind in this area due to the operating principle of pulse Doppler radars. Therefore, the apparatus 100 may provide in this region the (processed) optical data as replacement of the radar images.

Yet another advantage of weather radar systems such as the system 30 relates to the ability to detect precipitation areas, while electro-optical sensors 50 can detect individual cloud objects.

Therefore, individual sensor types bring sensor-specific limitations and desired functionalities that cannot be covered by one sensor type alone. Therefore, a combination according to embodiments of the exemplary AESA (Active Electronically Scanned Array) radar 30 with an electro-optical cloud detection improve the detection performance of weather phenomena significantly.

The following three scenarios illustrate in more detail the advantages of combination of the two sensor types according to embodiments:

### Scenario 1

An aircraft approaches a cloud 70 of cumulonimbus (Cb) type. The AESA weather radar 30 receives strong radar echoes in the area of the core of the cloud 70. The radar's antenna lobe is moved only in the azimuthal direction to avoid resource-intensive elevation swings. The electro-optical cloud detection system 50 detects the dimension of the cloud 70 in azimuth and elevation in the area 70, 220 of the radar detections.

Based on the cloud extent, the shape of the cloud 70, and the information that possibly heavy precipitation is contained in the cloud 70, the cloud can then be classified as a cumulonimbus. Violent turbulence can occur in the cloud edge region of a cumulonimbus, which can cause damage to the aircraft structure. Since the extension of the cloud was provided by the electro-optical cloud detection system (e.g. by the processing unit 110), a cloud evasion trajectory can be determined to keep a safe distance from the cloud and to ensure to fly around the turbulent areas at the edge of the cloud 70 of the cumulonimbus type.

A time-consuming elevation sweep of the radar 30, can be avoided in this case by using the electro-optical sensor 50 or its optical sensor data for the cloud detection. Although the vertical extent may be known, avoiding the weather area by passing the weather area above the same, is typically not an option.

### Scenario 2

The weather radar 30 may receive at low altitude echoes due to ground clutter and cannot distinguish this clutter from weather phenomena. In response hereto, the electro optical sensor 50 may be utilized for cloud detection to provide information whether or not clouds 70 are present in the near radar area and the radar echoes can be identified as clutter and can thus be eliminated.

For this, the electro-optical sensor 50 may be configured to capture images not only in the horizontal plane. Instead, the coverage area of the electro optical sensor 50 may also include regions above the airplane to obtain images also from the vertical region above the airplane. It is of particular advantage if the electro-optical sensor 50 provides a coverage area that is larger than half dome (more than the half sphere) above the aircraft. For this, the electro-optical sensor 50 may include multiple electro-optical sensors to provide a large coverage or a single electro-optical sensor with a large field-of-view.

### Scenario 3

The implemented electro-optical cloud detection is able to detect a cloud object 70 in a particular direction and provides an approximate distance to the object. The weather radar 30 may then adjust the radar pulse parameters, such as transmit power, waveform, and pulse repetition frequency, thereby increasing the radar sensitivity in the area where detection is expected.

Embodiments cover these and other scenarios, also as methods for improving and for scheduling of an airborne radar system according to embodiments.

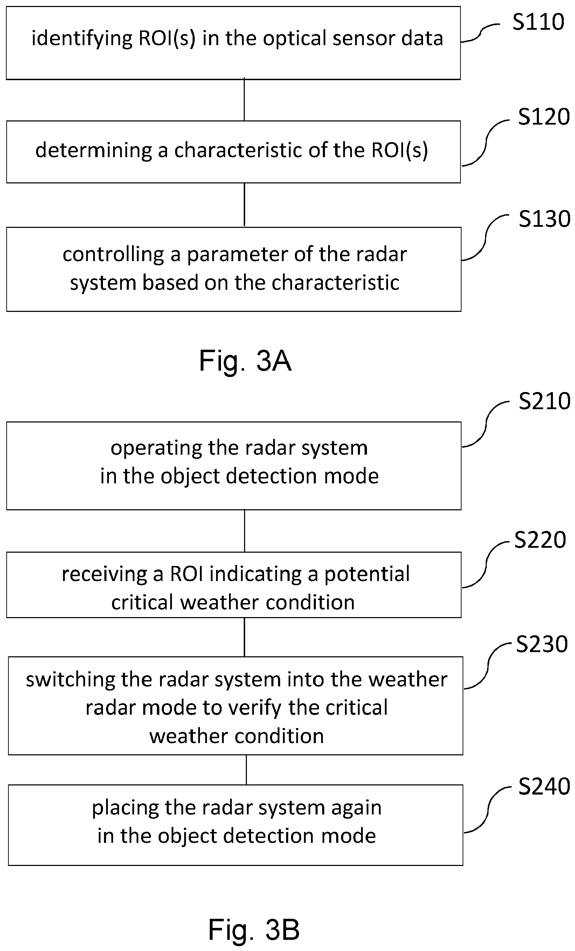

**Fig. 3A** shows schematically a flow chart for a method for improving an airborne radar system 30 based on sensor data of an airborne electro-optical sensor 50. The electro-optical sensor 50 is configured to provide optical sensor data covering at least part of a surrounding region. The method comprises:
- identifying S110 one or more regions of interest, ROIs 70, in the optical sensor data;
- determining S120 at least one characteristic of the ROI 70; and
- controlling S130 at least one parameter of the radar system 30 based on the at least one characteristic.

**Fig. 3B** shows schematically a flow diagram for a method for scheduling a radar system 30. The radar system 30 is configured to operate in a weather radar mode and in an object detection mode. The method comprises:
- operating S210 the radar system 30 in the object detection mode as default operational mode;
- receiving S220 from a processing module 110 at least one region of interest, ROI 70, indicating a potential critical weather condition;
- when no objects are to be identified, switching S230 the radar system 30 into the weather radar mode and scanning the ROI 70 to verify the critical weather condition; and thereafter
- switching S240 the radar system 30 again in the object detection mode.

Further embodiments relate to a method for detecting local weather conditions 70 in the vicinity of an aircraft, in particular on a planned flight route. This method comprises the following steps:
- providing an aircraft comprising at least one weather radar 30 and one electro-optical sensor 50, in particular a camera,
- acquiring weather radar data and optical sensor data in the vicinity of the aircraft and fusing the acquired data,
- calculating, from the optical sensor data, a position and an extent of clouds 70 relative to the aircraft,
- using the calculated results for controlling at least one operating parameter of the weather radar 30 during the acquisition of weather radar data, in particular to control an orientation and/or an intensity of the radar beam.

Embodiments overcome the following deficiencies of conventional systems:
As set out before, both sensor types (the radar 30 and the exemplary camera 50) have different sensor-specific limitations. The radar reflectivity depends on the droplet density, size and aggregate state of the droplets. Hence, when the clouds do not contain precipitation or whose droplet properties are insufficient, those clouds cannot be detected by the weather radar 30.

In addition, ground clutter echoes degrade the radar performance. Electro-optical cloud detection is capable of determining the dimension in azimuth and elevation of a cloud object 70, but range determination is subject to inaccuracies. The quality of image-based range determination of cloud objects depends on the aircraft's own motion, wind, the actual distance of the cloud, and the position of the cloud in the image, among other factors. In addition, environmental influences such as wind, terrain, lighting conditions, and cloud type have a high impact on the detection performance of the electro-optical cloud detection functionality.

The weather radar 30 and the electro-optical sensor system 50 exhibit complementarity. By associating the detection results, the advantages of one system can offset the disadvantages of the other to a certain extent. Reliably detecting and avoiding weather phenomena with one sensor system is difficult to realize due to insufficient information quality. The fusion of the two sets of sensor data would make this possible.

Embodiments provide therefore in particular the following advantages:
- An improved range determination of individual cloud objects 70 in the electro-optical sensor image is achieved by providing range information from the weather radar 30 (if weather area causes radar echo).
- Information on whether clouds are present in the radar's field of view allow adjustments to the radar parameters of waveform, pulse repetition frequency (PRF), and transmit power to illuminate the weather area in more detail on the radar side and better separate unwanted ground clutter from actual weather phenomena.
- By associating the information from both sensor systems, cloud dimension, cloud spacing, and precipitation information are known so that clouds 70 can be classified and a hazard assessment can be made.
- Based on this hazard estimation, evasion trajectories can be generated.
- In addition, in multi-functional radar systems 30, the weather radar function is only a sub-function, so it has to share resources with other functionalities (e.g., intruder detection). In this case, it is possible to operate the weather radar mode for a limited time and with limited transmit power to detect only signs of increased threats.
- Then, when the electro-optical cloud detection detects a relevant weather region 70, a high-power and timed radar pulse mode can occur in the area previously defined by the electro-optical cloud detection as a "region-of-interest". Thus, radar sensor scheduling can be improved.
- In pulse Doppler radars, a radar blind region exists in the near field of the radar. Due to the operating principle of a pulse Doppler radar, no detections can be made there. This limitation does not exist in the electro-optical range, so that the cloud detection component is also available in the near field. This is especially important with regard to the visual flight rules legal minimum distances to clouds (1.5 km horizontal legal minimum distance to clouds in most European airspaces).
- Time consuming elevation scans may be eliminated.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

Although the invention has been illustrated and described in detail by way of preferred embodiments, the invention is not limited by the examples disclosed, and other variations can be derived from these by the person skilled in the art without leaving the scope of the invention. It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner, wherein, with the knowledge of the disclosed inventive concept, the person skilled in the art is able to undertake various changes, for example, with regard to the functioning or arrangement of individual elements stated in an exemplary embodiment without leaving the scope of the invention, which is defined by the claims and their legal equivalents, such as further explanations in the description.

### List of reference signs

- 30: radar system
- 50: electro-optical sensor
- 70: region of interest (potentially critical)
- 90: ground, scenery, topography
- 100: apparatus for improving an airborne radar system
- 110: processing module
- 120: control module
- 210: region of heavy rain
- 220: region of rain
- 230: scanning region of radar
- FL: flight level

## Claims

1. An apparatus (100) for improving an airborne radar system (30) based on sensor data of an airborne electro-optical sensor (50), the electro-optical sensor (50) being configured to provide optical sensor data for at least a partial surround view, the apparatus (100) comprising:
a processing module (110) configured to identify in the optical sensor data one or more regions of interest, ROI (70), and to determine at least one characteristic of the ROI (70); and
a control module (120) configured to control at least one parameter of the radar system (30) based on the at least one characteristic.

2. The apparatus (100) according to claim 1, wherein the radar system (30) comprises an active electronically scanned array, AESA,
the control module (120) being further configured to adjust as parameter one or more of the following: a wave form, a beam width, a beam forming, a length of pulses, a number of pulses, a transmission frequency of pulses, pulse repetition frequency, a transmission power, an electronical steering of the radar transmission, a sampling rate, a number of pulses, a scan angle.

3. The apparatus (100) according to claim 1 or claim 2, wherein the ROI (70) comprises at least part of a cloud, the processing module (110) being further configured to determine as characteristic for the cloud or its part one or more of the following: a shape, an extension in azimuth or elevation, a maximal extension, a distance to the cloud or its part, a color or grey scale.

4. The apparatus (100) according to claim 3, wherein the processing module (110) is configured to determine as part of the characteristic at least one of the following:
- a classification of the clouds,
- an associated weather phenomenon,
- an associated hazard category.

5. The apparatus (100) according to claim 4, wherein, if the hazard category exceeds a predetermined level, the processing module (110) is further configured to cause a determination of an evasive maneuver and/or to provide data for visualization of the respective ROIs (70).

6. The apparatus (100) according to one of the preceding claims, wherein the processing module (110) is configured to perform at least one of the following:
- to receive radar data from the radar system (30),
- based on the determined characteristic, to identify clutter signals in the radar data,
- to remove identified clutter signals,
- to change a threshold for a filter of ground clutter.

7. The apparatus (100) according to one of the preceding claims, wherein the radar system (30) is operable in two modes: in a weather radar mode, and in an object detection mode,
wherein the control module (120) is configured to control radar system (30) in the weather radar mode during idle times of the object detection mode.

8. The apparatus (100) according to one of the preceding claims, wherein the processing module (110) is further configured to provide guidance to maintain a minimum distance to any cloud and thus to support an operation under visual flight rules.

9. The apparatus (100) according to one of the preceding claims, wherein the radar system (30) is blind in a near region and the processing module (110) is further configured to provide the optical sensor data as replacement of the radar system (30) for the near region.

10. The apparatus (100) according to one of the preceding claims, wherein the control module (120) is further configure to control the radar system (30) to scan in azimuthal direction and/or to scan in elevation direction for the ROI (70) only.

11. An aircraft with:
- a radar system (30), especially a radar system with an active electronically scanned array;
- an electro-optical sensor (50), especially with a panoramic view; and
- an apparatus (100) according to one of the preceding claims.

12. A method for improving an airborne radar system (30) based on sensor data of an airborne electro-optical sensor (50), the electro-optical sensor (50) being configured to provide optical sensor data covering at least part of a surrounding region, the method comprising:
- identifying (S110) in the optical sensor data one or more regions of interest, ROI (70);
- determining (S120) at least one characteristic of the ROI (70); and
- controlling (S130) at least one parameter of the radar system (30) based on the at least one characteristic.

13. A method for scheduling a radar system (30), the radar system (30) being configured to operate in a weather radar mode and in an object detection mode, the method comprising:
- operating (S210) the radar system (30) in the object detection mode as default operational mode;
- receiving (S220) from a processing module (110) at least one region of interest, ROI (70), indicating a potential critical weather condition;
- switching (S230) the radar system (50) into the weather radar mode and scanning the ROI (70) to verify the critical weather condition; and thereafter
- switching (S240) the radar system (50) again in the object detection mode.

14. The method according to claim 13, wherein the switching of the radar system is carried out when no objects are to be identified and comprises changing at least one of the following radar parameters: a frequency, a modulation, a pulse width, a start or terminating of a continuous wave operation, an intensity, a beam width.

15. A computer readable storage device with a program code stored thereon for performing the method of to claim 12 or claim 13, when the program code is executed on a computer or data processing unit.
